(19) Europäisches Patentamt
European Patent Office
Office européen des brevets

(11) **EP 2 639 090 A1**

(12) **EUROPEAN PATENT APPLICATION**

(43) Date of publication:
**18.09.2013 Bulletin 2013/38**

(51) Int Cl.:
***B60G 21/055*** (2006.01)

(21) Application number: **12382093.8**

(22) Date of filing: **15.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Edai Technical Unit, A.I.E.**
**48340 Amorebieta Vizcaya (ES)**

(72) Inventors:
• **Teijeiro Castro, Rafael**
  **48340 AMOREBIETA (Vizcaya) (ES)**
• **Seras Escolano, Ivan**
  **48340 AMOREBIETA (Vizcaya) (ES)**

(74) Representative: **Carpintero Lopez, Francisco et al**
**Herrero & Asociados, S.L.**
**Alcalá 35**
**28014 Madrid (ES)**

(54) **Active antiroll device for automotive vehicles, automotive vehicle and method for modifying the roll performance of a suspension in an automotive vehicle**

(57) The invention relates to an active antiroll device for automotive vehicles, automotive vehicle and method for modifying the roll performance of a suspension in an automotive vehicle, comprising a stabilizer bar (5) with a central part (8) articulated in two supports (13) to a front cradle (12) of an automotive vehicle, said central part (8) extending beyond each support (13) in a cantilever part (7), each cantilever part (7) being bent into a lever arm (6) which connects at its end, in a support point (9), with a connecting rod (14) which at its opposite end connects with an intermediate element which transmits the forces exerted in the wheels, for example a shock absorber (15) of the suspension of the automotive vehicle, where the device comprises means for modifying the torsional moment of the central part (8) of the stabilizer bar (5) over time.

FIG. 5

Printed by Jouve, 75001 PARIS (FR)

**Description**

Technical Field of the Invention

The present invention has an application in the automotive industry, and more specifically in the field of suspension systems.

Background of the Invention

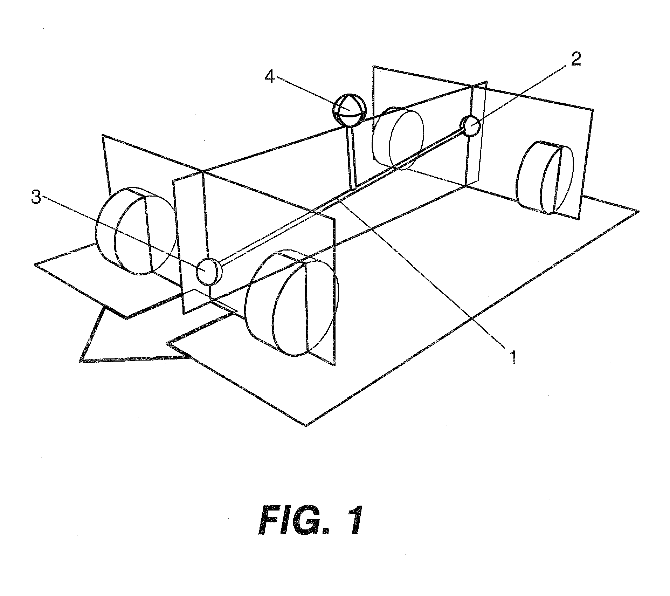

Roll in an automotive vehicle is defined as the rotation experienced by the suspended mass about the roll axis (1) of the vehicle caused by centrifugal force. As can be seen in Figure 1, the roll axis (1) is defined by an imaginary line joining the roll center rear (2) and the roll center front (3), where said centers (2, 3) are defined by the geometry of the suspension of the automotive vehicle in each case. In turn, the center of gravity (4) of the vehicle is located above the roll axis (1), this characteristic being what generates roll when the vehicle is in a curve, due to the effect of centrifugal force, which affects lateral stability of the vehicle.

Given this phenomenon, different situations that may occur when driving must be considered. On one hand, on a road it is not desirable for the vehicle to tend to incline too much when taking a curve because the centrifugal force may cause road-tire contact of some of the wheels to disappear or it may even cause the vehicle to turn over. Likewise, inclination of automotive vehicles when following curves raises some drawbacks which affect their stability. The inclination of the vehicle varies the chamber angle of the wheels, which could mean that the tires do not support the entire tread on the terrain, such that they work in poor conditions maintaining contact with the pavement with part of the shoulder of the tire. Furthermore, in these conditions automotive vehicle suspensions do not work optimally, because suspensions located in the interior of curves are extended, whereas suspensions located in the exterior are completely compressed. However, because of very irregular terrains it is of interest to make the suspension movement of one wheel independent with respect to the other for proper driving, as occurs in the case of the all terrain vehicles.

The rolling phenomenon of the vehicle can be reduced by means of stiffening the suspension; the problem is that comfort is reduced. Likewise, making the roll of the vehicle disappear completely also has drawbacks, because said roll provides the driver with a sensation of being alert when entering a curve at excessive speed, which results in the driver reducing speed, such that it is a driving safety measure for the automotive vehicle.

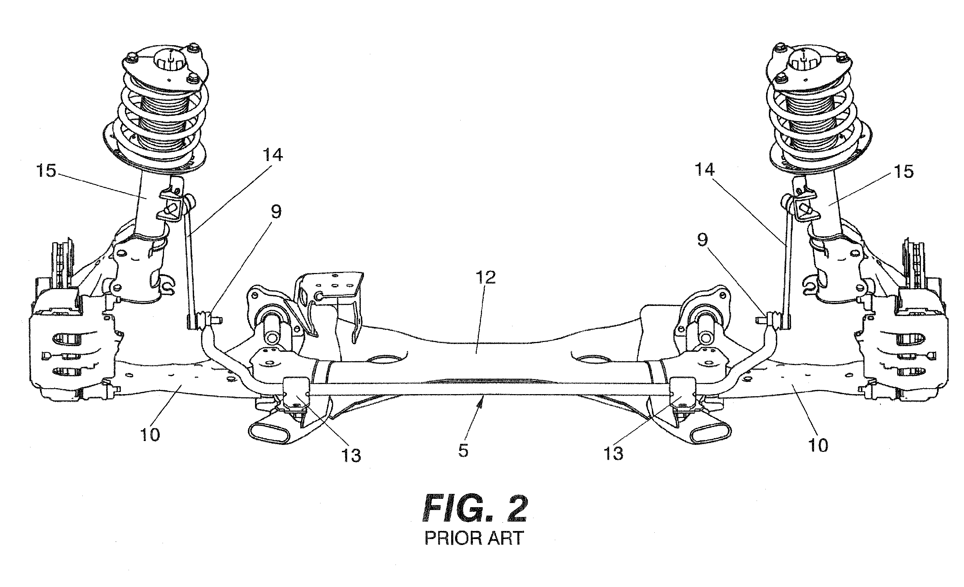

In current automotive vehicles, to increase roll stiffness, the suspension incorporates an antiroll system comprising a stabilizer or torsion bar (5), as can be seen in Figures 2 to 4. The stabilizer bar (5) is attached in its central part (8) to the front cradle (12) of the vehicle, generally by means of elastic supports (13) allowing the rotation of the stabilizer bar (5) with respect to the front cradle (12). At its ends, the stabilizer bar (5) is connected to the connecting rods (14), usually referred to as stabilizer link rods, by means of their articulation in the connection points (9). In turn, each connecting rod (14) at its opposite end is connected, also by means of articulation, to a shock absorber (15) of the suspension of the vehicle, all this being seen in Figure 2.

The stiffness of an automotive vehicle depends on the entire kinematic chain making up the suspension of the vehicle itself, such as for example the shock absorber, suspension spring, articulations between the various movable components, the stiffness of the frame, etc. However, the element which most affects the roll of the vehicle is the stabilizer bar.

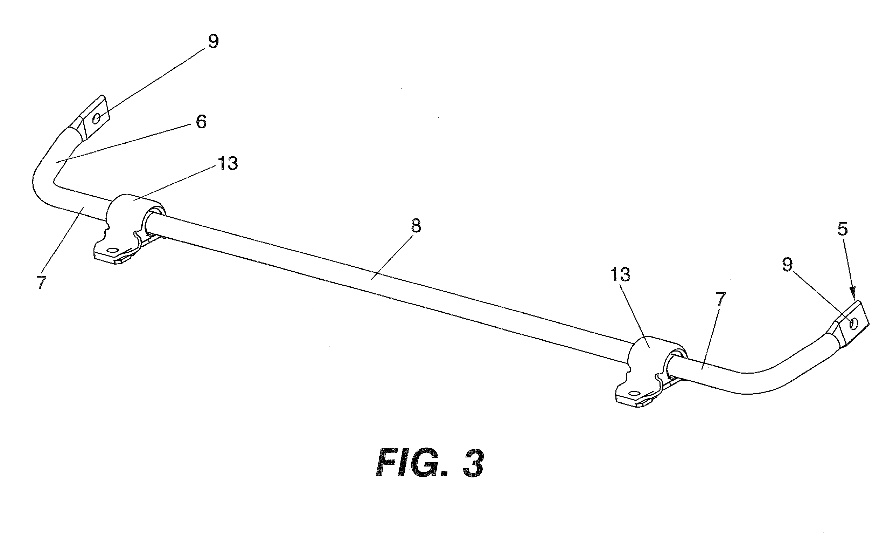

Increasing the stiffness of the stabilizer bar (5) primarily depends on two main characteristics, on one hand the geometry of the stabilizer bar (5) and on the other hand on the mechanical characteristics of the material of the stabilizer bar (5). The geometric characteristics affecting the stiffness of the stabilizer bar (5) are the length between the supports (13) which defines the central part (8), also referred to as active part, the length of the lever arms (6), the length of the cantilever part (7) and the geometry of the cross section of the stabilizer bar (5) in each sector (6, 7, 8). Another influencing characteristic, though to a lesser extent, are the supports (13) fixing the stabilizer bar (5) to the front cradle (12) or to the frame, depending on the stiffness of the supports (13) the stabilizer bar (5) will behave in a more or less rigid manner. Each of said parts has been identified in Figures 2 and 3. The roll performance of a suspension is usually symmetrical in shape, although there can be asymmetries due to the configuration of the suspension.

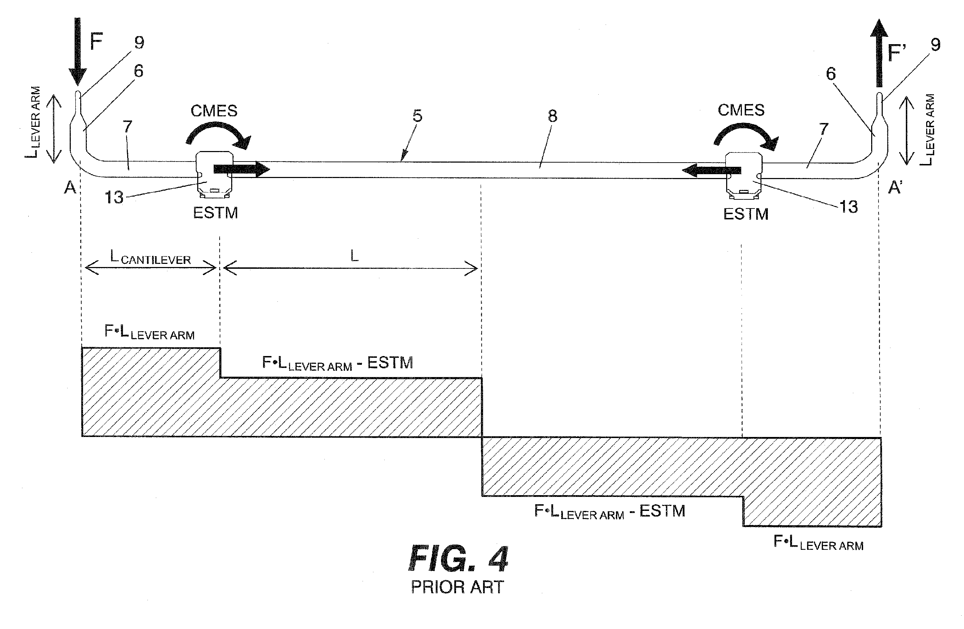

As can be seen in the diagram of Figure 4, the stabilizer bar (5) works under torsion and bending. Depending on the part of the stabilizer bar (5) where analysis is performed, the predominant stress is one or the other. As described in reference to Figure 3, three geometric areas consisting of the areas corresponding to the ends, which are the lever arms (6), the central part (8) which is located between the two supports (13), and the cantilever parts (7) which are the prolongation of the central part (8) beyond the supports (13), can be differentiated in a stabilizer bar (5).

To better understand the following explanation, in reference to Figure 4 corresponding to a stabilizer bar arrangement according to the state of the art, the formulation of the bending displacement of a cantilever beam and of the rotation caused by torsion is considered:

$$\text{Bending} \quad \rightarrow \quad f = \frac{F \cdot l^3}{3 \cdot E \cdot I}$$

$$\text{Torsion} \quad \rightarrow \quad \theta = \frac{T \cdot l}{I_p \cdot G}$$

where $f$ is the deflection of the beam under bending, $F$ is the force exerted at the end of the beam, $l$ the length of the cantilever, $E$ the modulus of elasticity, $I$ is the moment of inertia, $\theta$ is the torsional rotation angle, $T$ is the torsional moment, $I_p$ is the polar moment of inertia and $G$ is the angular modulus of elasticity.

In view of the foregoing, in the area corresponding to the lever arms (6) of the stabilizer bar (5), the only stress is bending stress, the magnitude of said stress depending on the length of said lever arm (6). In turn, bending and torsional stresses coexist in the cantilever parts (7) of the stabilizer bar (5), which stresses depend on the length of said cantilever parts (7), although bending is the magnitude that is most affected by the variable of said length, as can be seen in view of the preceding formulas. This does not mean that the predominant stress is the bending stress because variables such as the moment of inertia $I$ , polar moment of inertia $I_p$, modulus of elasticity $E$ or angular modulus of elasticity $G$ , must be taken into account in order to be able to compare both bending and torsional magnitudes to evaluate which stress is predominant in each particular case. In the central part (8) of the stabilizer bar (5), the predominant stress is torsional stress, and depending on the stiffness of the supports a greater or lesser bending stress will appear, such that in the event of the supports being elastic the influence due to bending is greater the lower the stiffness of the supports, and in contrast, if the supports are rigid the bending stress in the central part (8) is lower, being able to be nil.

The antiroll system described above operates as follows, when the automotive vehicle enters a curve, the torsion or stabilizer bar (5) exerts a torque opposite the rolling torque of the vehicle, such that it stabilizes the vehicle. Said torque exerted by the stabilizer bar (5) is caused by reaction to the forces exerted during the roll of the vehicle. The magnitude of the reaction is determined by the geometry and by the material of the stabilizer bar (5). Stabilizer bars (5) used today in conventional vehicles have a geometry and materials that do not vary over time, so the force that the stabilizer bar (5) can exert depends only on the degree of roll of the automotive vehicle, such that a greater roll provokes a greater reaction of the stabilizer bar (5). This antiroll system has an important limitation consisting of the inability to vary or modify the stiffness of the torsion bar (5) when driving the vehicle.

In order to overcome this limitation, there are automotive vehicles with active antiroll systems today which incorporate stabilizer bars in the frame which are formed by two half-bars connected to one another by means of a hydraulic motor, as described in United States patent application number US-2003/0111816-A1. The effect that is achieved with these active bar systems is that roll stiffness can be progressively increased. To that end, when the hydraulic motor is inactive, i.e., in standby, the two half-bars can be moved independently, this being the preferred way, for example, for driving situations in which there are obstacles on the road. On the other hand, when the hydraulic motor is active, i.e., when it operates, it exerts the necessary force to connect or join the two half-bars thus forming a single rigid bar, this being the preferred manner, for example, when the automotive vehicle enters a curve.

However, it must be considered that this mechanism has a split stabilizer bar, i.e., it can have roll stiffness of nil value. In addition to its complexity and high cost, being able to have nil stiffness has two enormous drawbacks: in the first place, in said situation, the stabilizer bar does not transmit the forces from one end to the other because there is no connection between both ends and because the clutch is attached to the frame, and in the second place, the stabilizer bar looses working capacity as a torsion spring. In contrast to this mechanism, when a continuous bar is twisted, it accumulates energy that it is capable of returning when the load producing torsion thereof is no longer applied, such that the bar returns to its nominal position, however, in the case of having a split bar, this property or capacity is lost.

There are also active antiroll systems, such as that described in United States patent number US- 7543832- B2, in which the stabilizer bar is split but at the same type they conserve the capacity to transmit stresses from one side of the bar to the other. This transmission is done by means of a spring working under compression. The active character of these antiroll systems, i.e., the manner of achieving variable stiffness of the stabilizer bar, consists of changing the stiffness of the spring, for which purpose said spring is compressed or released depending on the stiffness required at all times or in each situation.

However, this active mechanism has the drawback of causing elevated friction generated by the contact between a projection and a groove comprised in the device for acting on the spring, such that said projection is subject to sustaining considerable wear, which results in the occurrence of unwanted allowances, with the noises and impacts these entail.

Another variable stiffness stabilizer bar is described in European patent application number EP- 2070743- A1, in which the stiffness is varied by means of changing the orientation of the section in the lever arm of the stabilizer bar.

This device uses two motors which are arranged on the lever arm of the stabilizer bar, i.e., in movement with it, which creates greater inertia for the bar. The stiffness variation is not very broad because the bar must always conserve a minimum section so as to prevent it from breaking and a maximum section established by the available space, so stiffness variation can only occur between minimum and maximum stiffness values that are very close to one another.

On the other hand, stiffness variation is determined by the bending of the lever arm, however, it must be considered that the distance of the lever arm of a conventional stabilizer bar is not very great, so the stiffness variation that is achieved by means of this device is not really significant for driving. Furthermore, depending on the configuration of the anchoring of the ball joint used at the end of the lever arm, a very large work space for the ball joint may be required given that it has to make a very large rotation, which entails a limitation and drawback in its design.

Description of the Invention

A first aspect of the present invention relates to an active antiroll device for automotive vehicles which allows achieving a suspension stiffness balance that allows optimal adaptation to both highway driving and to irregular terrain driving, maintaining a compromise between safety and comfort, and all this in an economical and simple manner which has not currently been achieved with active antiroll devices of the state of the art.

The device proposed by the invention comprises a stabilizer bar, also commonly referred to as torsion bar, where said stabilizer bar in turn comprises a central part, also referred to as active part because it is the part that mainly works under torsion, which is articulated in at least two supports, which are preferably elastic although they can also be completely rigid, attached to a front cradle or to the frame of a suspension of a automotive vehicle. The central part extends beyond each support in a cantilever part, generally shorter than the central part, each cantilever part being bent into a lever arm, preferably having dimensions comparable to each cantilever part. In turn, each lever arm connects, by means of articulation, at its end with a connecting rod, also commonly referred to as a stabilizer link, such that at the opposite end, each connecting rod is connected, by means of articulation, with the wheel of the vehicle through an intermediate element capable of transmitting the reaction forces of the stabilizer bar to the wheels, i.e., through the interconnection of at least another part, for example the suspension arm or the shock absorber of the suspension of the automotive vehicle.

According to the invention, the active antiroll device comprises means for modifying or varying the torsional moment of the central part of the stabilizer bar over time. The device of the invention thereby allows modifying or varying the stiffness of the stabilizer bar so that it adapts to different driving modes. For example, for sport driving, elevated stiffness of the stabilizer bar is appropriate, however, when driving on rural and irregular terrain, low, i.e. reduced, stiffness of the stabilizer bar is appropriate.

The solution proposed by the invention is much simpler than antiroll systems of the state of the art as it consists of applying the concept of modifying or varying torsional moment, which can be done, for example, by braking the rotational movement of the stabilizer bar. To that end the solution proposed by the invention contemplates coupling to the stabilizer bar said means for modifying the torque depending on the present needs when driving the automotive vehicle.

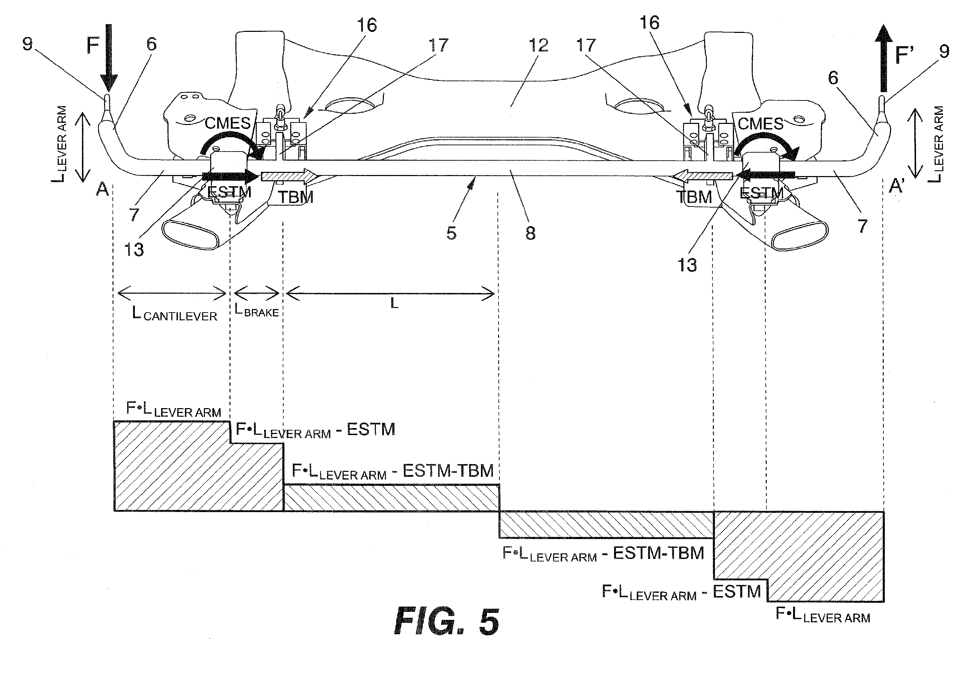

Support of the diagrams of torsional moments depicted in Figures 4 and 5 is used to explain the effects of the invention with respect to the state of the art, Figure 4 showing a stabilizer bar arrangement of the state of the art and Figure 5 showing an arrangement according to the device of the invention, the stresses of the stabilizer bar in each of said arrangements are then considered mathematically in a comparative manner.

The underlying principle of any active antiroll system is that the ideal situation in an automotive vehicle is being able to vary the stiffness of the torsion bar depending on the driving that is desired at all times. For sport driving, it is of interest for the stiffness of the bar to be elevated to improve the lateral dynamics of the vehicle; however for abrupt terrain or mountain driving, it is of interest for the stiffness of the stabilizer bar to be low, i.e., reduced.

To that end, according to the invention a possible solution which could be applied in varying the torsional moment over time described above, consists of generating a torque or torsional moment in the direction opposite the torsional moment to which the stabilizer bar is subjected as a result of the actions received during conventional operation, i.e., the actions received from the connecting rods which are connected to an intermediate element transmitting the reaction forces of the stabilizer bar to the wheels, said intermediate elements in the embodiment being represented by the shock absorbers. The torsional stiffness of the stabilizer bar is thus increased.

The forces acting on a stabilizer bar of the state of the art and the diagram of torsional moments, all depicted in Figure 4 in a theoretical and simplified manner, are explained below.

The angle turned in section A and in section A' under torsion is similar but in the opposite direction and is defined by the following expression:

$$\theta_A = \frac{F \cdot L_{lever\ arm} \cdot L_{cantilever} + \left(F \cdot L_{lever\ arm} - ESTM\right) \cdot L}{I_p \cdot G}$$

As can be seen in the preceding formula, and considering a common arrangement in which the stabilizer bar is symmetrical and has a constant cross section at any point of the bar, the angle turned under torsion depends on a plurality of variables: the geometry of the bar, including the length of lever arm, the length of the cantilever part, the length total of the stabilizer bar and the cross section of the stabilizer bar; likewise, said angle turned under torsion also depends on the material of the bar, on the type of support of the bar, whether it is elastic to a certain extent or completely stiff, and on the force applied in the lever arms.

The concept of stiffness of the stabilizer bar is based on the supposition that the applied force is constant, therefore a very stiff stabilizer bar means that there is a rotation with a very small section, whereas a stabilizer bar that is not very stiff means that there is a rotation with a larger section, assuming that the applied force is the same in both cases. The conclusion is that the stiffness of a stabilizer bar of the state of the art, such as the arrangement depicted in Figure 4, is constant because the geometry, material and typology of its supports are also constant.

In contrast with the foregoing, the invention proposes introducing a variation of the torsional moment over time such that an active antiroll device is obtained. One of the solutions contemplated according to said principle is to introduce a torsional moment in the direction opposite to the effect, also a torsional moment caused by the force applied on the stabilizer bar, specifically on the lever arms. Figure 5 shows an embodiment of the active antiroll device of the invention as well as the corresponding diagram of torsional moments which can be compared with that of Figure 4 which showed an arrangement of the state of the art. As can be seen in said Figure 5, one way to apply said torsional moment opposite to that caused by the effect of the actions on the bar to the stabilizer bar in the device of the invention is by braking the rotation of the stabilizer bar, i.e., by means of introducing a brake acting on the bar.

As previously done with the stabilizer bar of the state of the art, the diagrams of the torsional moments are calculated as shown in Figure 5.

The angle rotated in section A and in section A' under torsion is similar but in the opposite direction and is defined by the following expression:

$$\theta_A = \frac{F \cdot L_{la} \cdot L_{cantilever} + (F \cdot L_{la} - ESTM) \cdot L_{brake} + (F \cdot L_{la} - ESTM - TMB) \cdot L}{I_p \cdot G}$$

where the subscript "la" means "lever arm".

With the incorporation of means for modifying or varying the torsional moment of the stabilizer bar over time, which is done in the depicted embodiment by means of a disc brake, it can be seen how for the same force the angle rotated in section A is smaller because an opposite moment TMB (torsional moment of the brake) is introduced. The magnitude of the TMB can range from 0, corresponding to a situation in which the brake is not operated, up to a maximum of $(F \cdot L_{lever\ arm} - ESTM)$ which corresponds with a brake locking situation.

A second aspect of the invention relates to an automotive vehicle comprising an active antiroll device such as that described above.

A third aspect of the invention relates to a method for modifying the performance of a suspension of an automotive vehicle against rolling. To that end, the method comprises modifying the torsional moment of a central part located between two supports of a stabilizer bar of an antiroll device of the automotive vehicle over time.

The possibility of the method comprising applying a torsional moment on the central part of the stabilizer bar in the direction opposite a torsional moment in said central part caused by force applied on said stabilizer bar from the connecting rods to increase the torsional stiffness of said stabilizer bar is contemplated. The antiroll device is thereby adapted for sport driving, in which the torsional stiffness of the bar has to be elevated, however, if driving on rural and irregular terrain, the stiffness of the stabilizer bar has to be small, so the method comprises not introducing said torsional moment, i.e., releasing the braking means acting on the stabilizer bar.

Description of the Drawings

To complement the description being made and for the purpose of aiding to better understand the features of the invention according to a preferred practical embodiment thereof, a set of drawings is attached as an integral part of said description in which the following has been depicted with an illustrative and non-limiting character:

Figure 1 shows a schematic perspective view of the roll axis of an automotive vehicle, defined from its center of gravity and the front and rear roll centers, which can be differentiated by the representation of the forward movement direction of the vehicle by means of an arrow.

Figure 2 shows a front schematic perspective view of a front suspension of the state of the art, in which the arrangement of a conventional stabilizer bar as well as typical elements such as shock absorbers, suspension arms and supports of the suspension bar, can be seen.

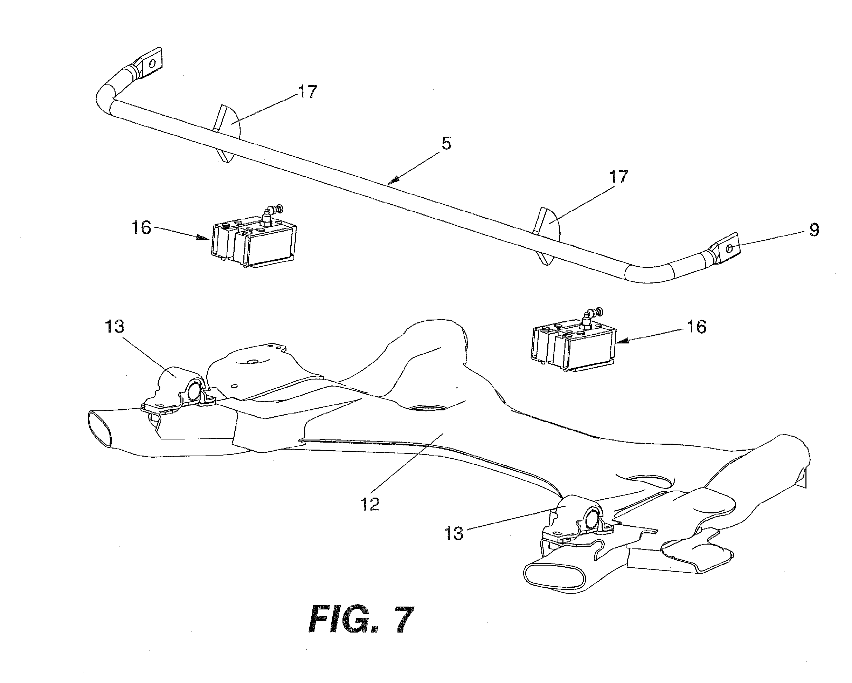

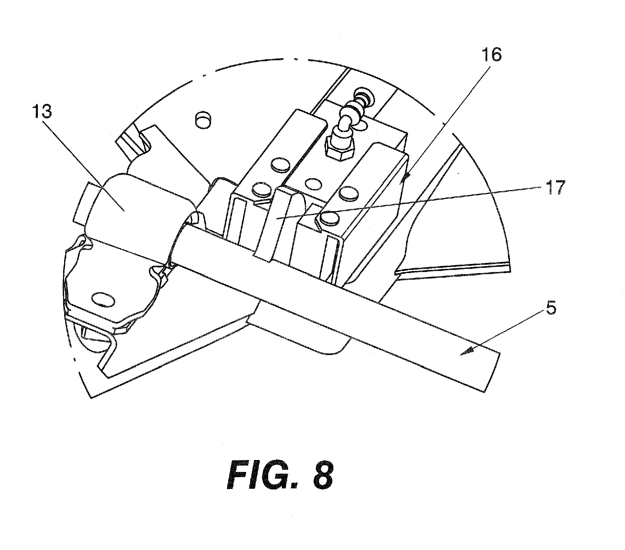

Figure 3 shows a schematic perspective view of a stabilizer bar of the state of the art and its supports, on which the different sectors forming said stabilizer bar can be differentiated, i.e., the lever arms located at the ends, the cantilever part located between the supports and the lever arms, and finally the central part located between the supports, said areas likewise being corresponded in the stabilizer bar comprised in the invention, depicted in Figures 5 to 8.

Figure 4 shows a diagram of torsional moments to which the arrangement of the state of the art depicted in Figures 2 and 3, and also shown schematically according to an elevational view in the same figure, is subjected.

Figure 5 shows a diagram of torsional moments to which a stabilizer bar according to the invention is subjected, having shown in a schematic manner a possible embodiment thereof in the same figure according to an elevational view, showing the arrangement of braking means of the stabilizer bar, as well as lower torsional moment values compared with an arrangement of the state of the art, such as that depicted in Figure 4.

Figure 6 shows a top perspective view of an embodiment of the device of the invention.

Figure 7 shows an exploded view of the device depicted in Figure 6.

Figure 8 shows a detail of the braking means of the embodiment of the device depicted in Figures 5 to 7, consisting of caliper brakes acting on a brake disc of the stabilizer bar.

Preferred Embodiment of the Invention

In view of the described figures, it can be seen how in one of the possible embodiments of the invention the antiroll device proposed by the invention comprises a stabilizer bar (5) comprising a central part (8) which is articulated in at least two elastic supports (13) to a front cradle (12) or frame of the automotive vehicle, said front cradle (12) also being connected with the arms of the suspension (10). The central part (8) extends beyond each support (13) into a cantilever part (7), which is shorter than the central part (8), each cantilever part (7) being bent into a lever arm (6). In turn, each lever arm (6) connects at its end with a connecting rod (14) which in turn connects with another intermediate element, such as for example the suspension arm or shock absorber of the suspension, and said intermediate element in turn connects with the wheel.

The active antiroll device comprises means for modifying or varying the torsional moment of the central part (8) of the stabilizer bar (5) over time. Specifically, said means for modifying the torsional moment comprise braking means consisting of disc brakes (16, 17) for braking rotation of the stabilizer bar. Said disc brakes (16, 17) comprise two actuating elements or brake calipers (16) integral with the front cradle (12) or frame of the automotive vehicle arranged to act on brake discs (17) which are fixed to the central part (8) of the stabilizer bar (5).

Disc brakes (16, 17) are used in the present embodiment to vary torque, but any other type of mechanism can be arranged as braking means for varying torque in the torsion bar (5), for example pneumatic clutches, electric motors, magnetic motors, in summary any type of mechanism that is capable of braking a moving shaft.

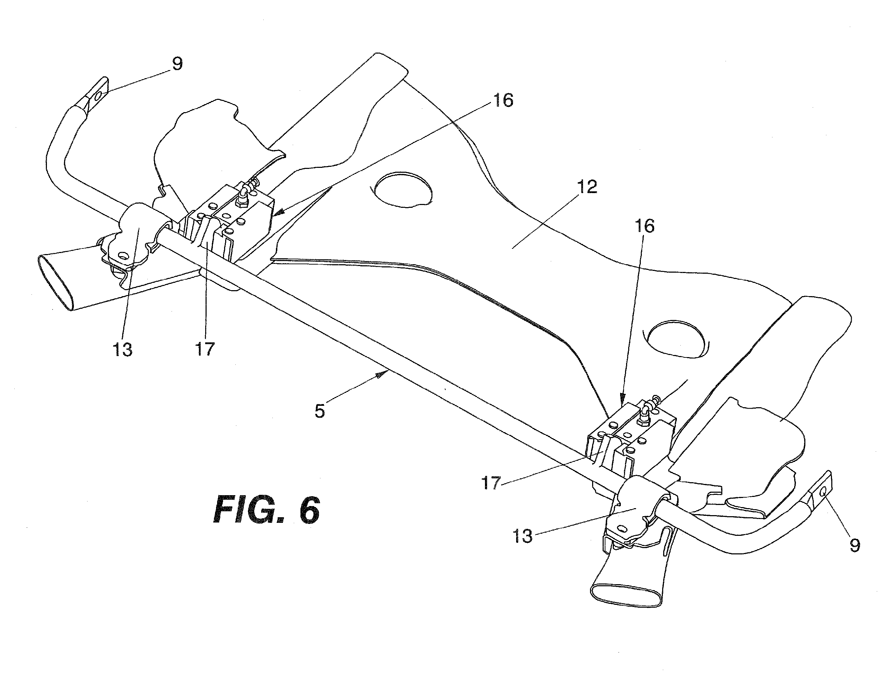

According to the present embodiment, the device comprises two disc brakes (16, 17), each one coupled at each end of the central part (8), which allow counteracting the torque of the bar (5). Depending on the type of element used to counteract the torque of the bar (5), it would be appropriate for the supports to be stiff in the cardinal axis, i.e., there is no bending in the central part (8) of the bar (5). For example, for the particular case of some types of pneumatic clutches, it is not necessary to take this measure because the element absorbs the bending generated by the bar in the central part (8). However, in a conventional friction disc clutch it would be appropriate to take this measure because the element would be affected by the bending of the bar in the central part (8) and would not work correctly, being able to cause the latter to break. For this specific case, for example the supports (13) can be commercial bearings preventing CMES and having the ESTM free, as observed in Figures 5 and 6.

In view of this description and set of drawings, the person skilled in the art will understand that the embodiments of the invention that have been described can be combined in multiple ways within the object of the invention. The invention has been described according to several preferred embodiments thereof, but it will be evident for the person skilled in the art that multiple variations can be introduced in said preferred embodiments without exceeding the object of the claimed invention.

**Claims**

1.  Active antiroll device for automotive vehicles, comprising a stabilizer bar (5) comprising a central part (8) which is articulated in at least two supports (13) to a front cradle (12) or to the frame of an automotive vehicle, said central part (8) extending beyond each support (13) in a cantilever part (7), each cantilever part (7) being bent into a lever arm (6) which connects at its end, in a support point (9), with a connecting rod (14) which at its opposite end connects with an intermediate element capable of transmitting reaction forces of the stabilizer bar (5) to the wheels of the automotive vehicle, **characterized in that** the device comprises means for modifying the torsional moment of the central part (8) of the stabilizer bar (5) over time.

2. Antiroll device according to claim 1, wherein the means for modifying the torsional moment comprise braking means (16, 17) for braking rotation of the stabilizer bar.

3. Antiroll device according to claim 2, wherein the braking means comprise actuating elements consisting of brake calipers (16) integral with the front cradle (12) or the frame of the automotive vehicle, arranged to act on brake discs (17) which are fixed to the central part (8) of the stabilizer bar (5).

4. Antiroll device according to claim 2, wherein the braking means comprise caliper brakes (16) integral with the front cradle (12) or the frame of the automotive vehicle, arranged to act on brake discs (17) which are integrated in the central part (8) of the stabilizer bar (5).

5. Antiroll device according to claim 2, wherein the braking means comprises pneumatic clutches.

6. Antiroll device according to claim 2, wherein the braking means comprise electric motors.

7. Antiroll device according to claim 2, wherein the braking means comprise magnetic motors.

8. Automotive vehicle comprising an antiroll device according to any of claims 1 to 7.

9. Method for modifying the roll performance of a suspension in an automotive vehicle, **characterized in that** it comprises modifying over time the torsional moment of a central part (8) of a stabilizer bar (5) of an antiroll device of the automotive vehicle located between two supports (13).

10. Method according to claim 9, which comprises applying a torsional moment on the central part (8) of the stabilizer bar (5) in the direction opposite to a torsional moment in said central part (8) caused by force applied on said stabilizer bar (5) to increase the torsional stiffness of said stabilizer bar (5).

**FIG. 1**

**FIG. 2**

PRIOR ART

*FIG. 3*

FIG. 4
PRIOR ART

EP 2 639 090 A1

**FIG. 5**

EP 2 639 090 A1

*FIG. 6*

**FIG. 7**

**FIG. 8**

Europäisches
Patentamt

European
Patent Office

Office européen
des brevets

## EUROPEAN SEARCH REPORT

Application Number

EP 12 38 2093

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 894 755 A2 (BENTELER AUTOMOBILTECHNIK GMBH [DE]) 5 March 2008 (2008-03-05) * paragraphs [0028], [0029], [0030], [0044], [0045], [0054]; figures 2,4,5 * ----- | 1-10 | INV. B60G21/055 |
| X | DE 198 21 209 A1 (TENNECO AUTOMOTIVE INC [US]) 26 November 1998 (1998-11-26) * figures 1,2,3 * ----- | 1,2,9 | |
| X | DE 10 2006 009524 A1 (PNP AUTOMOTIVE GMBH [DE]) 6 September 2007 (2007-09-06) * paragraphs [0021], [0022]; figures 1,5,6 * ----- | 1,2,9 | |
| X | WO 03/068541 A1 (ZF LEMFOERDER METALLWAREN AG [DE]; ERSOY METIN [DE]; VORTMEYER JENS [D] 21 August 2003 (2003-08-21) * page 3, paragraph 5 - page 4, paragraph 1 * * page 6, paragraph 5 * * page 14, paragraph 6 - page 15, paragraph 1; figures 1,5,6 * ----- | 1,9 | |
| X | US 2007/194733 A1 (KUROKOCHI TAKASHI [JP]) 23 August 2007 (2007-08-23) * paragraphs [0009] - [0013], [0018] - [0023], [0028]; figures 1,3 * ----- | 1,9 | TECHNICAL FIELDS SEARCHED (IPC) B60G |
| X | US 6 425 585 B1 (SCHUELKE ARMIN [DE] ET AL) 30 July 2002 (2002-07-30) * column 2, lines 20-37 * * column 3, line 54 - column 4, line 4 * * column 4, lines 23-50 * * column 5, lines 24-41; figures 1,2 * ----- -/-- | 1,9 | |

The present search report has been drawn up for all claims

| Place of search | Date of completion of the search | Examiner |
|---|---|---|
| The Hague | 24 September 2012 | Kebemou, Augustin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office
Europäisches Patentamt
Office européen des brevets

**EUROPEAN SEARCH REPORT**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/135088 A1 (TOYOTA MOTOR CO LTD [JP]; BUMA SHUUICHI [JP]; CHO JAESUNG [JP]) 21 December 2006 (2006-12-21) * the whole document * ----- | 1,9 | |
| X | EP 0 974 477 A1 (TRW INC [US] TRW AUTOMOTIVE US LLC [US]) 26 January 2000 (2000-01-26) * the whole document * ----- | 1,9 | |

TECHNICAL FIELDS
SEARCHED     (IPC)

The present search report has been drawn up for all claims

| Place of search | Date of completion of the search | Examiner |
|---|---|---|
| The Hague | 24 September 2012 | Kebemou, Augustin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

EP 2 639 090 A1

**ANNEX TO THE EUROPEAN SEARCH REPORT
ON EUROPEAN PATENT APPLICATION NO.**

EP 12 38 2093

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2012

| Patent document cited in search report | | Publication date | Patent family member(s) | | Publication date |
|---|---|---|---|---|---|
| EP 1894755 | A2 | 05-03-2008 | DE 102006012110 A1 | | 30-08-2007 |
| | | | EP 1826035 A1 | | 29-08-2007 |
| | | | EP 1894755 A2 | | 05-03-2008 |
| | | | US 2007193841 A1 | | 23-08-2007 |
| DE 19821209 | A1 | 26-11-1998 | DE 19821209 A1 | | 26-11-1998 |
| | | | GB 2327214 A | | 20-01-1999 |
| | | | JP 3374076 B2 | | 04-02-2003 |
| | | | JP 3742610 B2 | | 08-02-2006 |
| | | | JP 10324138 A | | 08-12-1998 |
| | | | JP 2003104027 A | | 09-04-2003 |
| | | | US 5882017 A | | 16-03-1999 |
| | | | US 6161843 A | | 19-12-2000 |
| DE 102006009524 | A1 | 06-09-2007 | AT 463371 T | | 15-04-2010 |
| | | | DE 102006009524 A1 | | 06-09-2007 |
| | | | EP 2018282 A1 | | 28-01-2009 |
| | | | WO 2007098743 A1 | | 07-09-2007 |
| WO 03068541 | A1 | 21-08-2003 | CN 1516650 A | | 28-07-2004 |
| | | | DE 10205932 A1 | | 21-08-2003 |
| | | | EP 1474301 A1 | | 10-11-2004 |
| | | | JP 2005517564 A | | 16-06-2005 |
| | | | US 2004169346 A1 | | 02-09-2004 |
| | | | WO 03068541 A1 | | 21-08-2003 |
| US 2007194733 | A1 | 23-08-2007 | CN 101024371 A | | 29-08-2007 |
| | | | DE 102007000098 A1 | | 06-09-2007 |
| | | | JP 4341632 B2 | | 07-10-2009 |
| | | | JP 2007223366 A | | 06-09-2007 |
| | | | US 2007194733 A1 | | 23-08-2007 |
| US 6425585 | B1 | 30-07-2002 | EP 1030790 A1 | | 30-08-2000 |
| | | | JP 4303422 B2 | | 29-07-2009 |
| | | | JP 2002518245 A | | 25-06-2002 |
| | | | US 6425585 B1 | | 30-07-2002 |
| | | | WO 9967100 A1 | | 29-12-1999 |
| WO 2006135088 | A1 | 21-12-2006 | CN 101287617 A | | 15-10-2008 |
| | | | EP 1893425 A1 | | 05-03-2008 |
| | | | JP 4297085 B2 | | 15-07-2009 |
| | | | JP 2006347360 A | | 28-12-2006 |
| | | | US 2009224493 A1 | | 10-09-2009 |
| | | | WO 2006135088 A1 | | 21-12-2006 |
| EP 0974477 | A1 | 26-01-2000 | BR 9903404 A | | 19-09-2000 |

**ANNEX TO THE EUROPEAN SEARCH REPORT**
**ON EUROPEAN PATENT APPLICATION NO.**                 EP 12 38 2093

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2012

| Patent document cited in search report | Publication date | Patent family member(s) | | Publication date |
|---|---|---|---|---|
| | | CA | 2279009 A1 | 24-01-2000 |
| | | DE | 69927096 D1 | 13-10-2005 |
| | | DE | 69927096 T2 | 29-06-2006 |
| | | EP | 0974477 A1 | 26-01-2000 |
| | | US | 6149166 A | 21-11-2000 |

**EP 2 639 090 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030111816 A1
- US 7543832 B2
- EP 2070743 A1